# EUROPEAN PATENT APPLICATION

(11) **EP 4 836 104 A1**
(43) Date of publication of application: **04.11.2026**
(21) Application number: 26175961.7
(22) Date of filing: 30.04.2026
(51) Int. Cl.: H01M 50/105, H01M 50/124, H01M 50/184, H01M 50/186, H01M 50/178

(54) **POUCH-TYPE SECONDARY BATTERY**

(30) Priority: 02.05.2025 KR 20250058381; 31.12.2025 KR 20250215897
(71) Applicant: SK On Co., Ltd., Seoul 03161 (KR)
(72) Inventor: JANG, Jun Ho, 34124 Daejeon (KR); JEON, Jae Hyun, 34124 Daejeon (KR); JEONG, Jun Hui, 34124 Daejeon (KR); KIM, Jin Go, 34124 Daejeon (KR); CHO, Eun Soo, 34124 Daejeon (KR)
(74) Representative: Stolmár & Partner Patentanwälte PartG mbB

(57) **Abstract**

A pouch-type secondary battery includes an electrode assembly including at least one electrode tab, a pouch-type case accommodating the electrode assembly such that the at least one electrode tab is drawn out to the outside through a sealing portion, and an insulating portion covering at least a portion of the sealing portion. The pouch-type case is formed of a sheet member in which a plurality of layers are laminated, and the sealing portion is formed by sealing at least a portion of the sheet member. The insulating portion covers the at least a portion of the sealing portion and is disposed in a position corresponding to at least a portion of the at least one electrode tab.

## Description

### BACKGROUND OF THE INVENTION

### 1. Field

Various embodiments of the present disclosure generally relate to a pouch-type secondary battery.

### 2. Description of the Related Art

A secondary battery, unlike a primary battery, is rechargeable, and demand therefor has been gradually increasing due to its potential for miniaturization and high capacity. Such secondary batteries may be manufactured in the form of a pack including a single battery cell or a pack including a plurality of battery cells connected to one another, and are widely used as power sources for mobile phones, notebook computers, and electric vehicles.

Among these secondary batteries, lithium secondary batteries have a higher energy density than nickel-manganese batteries or nickel-cadmium batteries, provide higher capacity per unit area, exhibit lower self-discharge rates, and have longer lifespans. In addition, lithium secondary batteries are free from memory effect, thereby providing improved convenience of use and extended service life.

Such secondary batteries may be classified according to a shape of a case, and the case may include cylindrical, prismatic, and pouch types.

A cylindrical secondary battery using a cylindrical case has a structure in which a positive electrode, a negative electrode, and a separator are wound to form an electrode assembly, and the electrode assembly is inserted into the cylindrical case made of a metal material. Such cylindrical secondary batteries have advantages of excellent mechanical strength and durability.

A prismatic secondary battery using a prismatic case has a structure in which an electrode assembly is accommodated in a rectangular metal case and sealed with a cap assembly, thereby providing advantages of high space utilization and ease of battery pack design. In contrast, such cylindrical and prismatic secondary batteries, which use metal cases, have disadvantages in that their weight increases and manufacturing and assembly costs are high.

A pouch-type secondary battery using a pouch-type case employs a thin and flexible pouch sheet (e.g., an Al-laminated sheet) as the case, and thus, as compared with the cylindrical or prismatic secondary batteries, provides advantages in that it is easily reduced in weight and thickness for a given capacity, has excellent space utilization, and can be designed in various sizes and shapes.

In contrast, in the case of a pouch-type secondary battery, a pouch-type case includes a metal layer, and side reactions such as short circuits or corrosion may occur between the metal layer and an electrode tab or an electrolyte solution, or defect events may occur during a manufacturing process. Accordingly, various studies have been conducted to eliminate such side reactions and defect events and to improve the safety of pouch-type secondary batteries.

### SUMMARY OF THE INVENTION

An embodiment of the present disclosure provides a pouch-type secondary battery with improved safety and productivity.

Further, an embodiment of the present disclosure provides the pouch-type secondary battery exhibiting high process efficiency while exhibiting improved safety by forming an insulating portion in the pouch-type secondary battery using a novel method.

Various embodiments of the present disclosure can be widely applied in the green technology fields such as electric vehicles, battery charging stations, energy storage systems (ESSs), and other technologies using batteries such as photovoltaics and wind power. In addition, various embodiments of the present disclosure can also be used for eco-friendly mobility, including electric and hybrid vehicles, to reduce air pollution and greenhouse gas emissions to prevent or mitigate climate change.

An embodiment of the present disclosure may include a pouch-type secondary battery.

In an embodiment, the pouch-type secondary battery according to an embodiment of the present disclosure may include an electrode assembly including at least one electrode tab, a pouch-type case accommodating the electrode assembly such that the at least one electrode tab is drawn out to the outside through a sealing portion, and an insulating portion covering at least a portion of the sealing portion. The pouch-type case may be formed of a sheet member in which a plurality of layers are laminated, and the sealing portion may be formed by sealing at least a portion of the sheet member. The insulating portion may cover the at least a portion of the sealing portion and may be disposed in a position corresponding to at least a portion of the at least one electrode tab.

In an embodiment, the insulating portion may include one or more of a stepped portion and an inclined portion.

In an embodiment, a sealant may be provided on an outer surface of the at least one electrode tab, the sealant may be interposed between the at least one electrode tab and the sealing portion, at least a portion of the sealant may include a first sealant region protruding outward from the sealing portion, and at least a portion of the first sealant region may be covered by the insulating portion.

In an embodiment, the insulating portion may continuously cover the sealing portion and the sealant, and may be stepped in a direction from the sealing portion toward the sealant.

In an embodiment, the insulating portion may continuously cover the sealing portion and the sealant, and may be inclined in a direction from the sealing portion toward the sealant.

In an embodiment, the insulating portion may cover a terminal end of the sealant.

In an embodiment, the insulating portion may cover a terminal end of the sealing portion, and may extend continuously in one direction from the terminal end of the sealing portion, or may be bent at the terminal end of the sealing portion and may extend in the other direction.

In an embodiment, the insulating portion may be formed by extending one end and the other end thereof, and the other end of the insulating portion may be provided on the at least one electrode tab outside the pouch-type case.

In an embodiment, the insulating portion may include a first end and a second end extending over the terminal end of the sealing portion, and the second end of the insulating portion is provided on the at least one electrode tab outside the pouch-type case.

In an embodiment, the pouch-type case may include a main chamber recessed inward to accommodate the electrode assembly, and the sealing portion sealing an outer surface of the main chamber. The sealing portion may include one or more first sealing portions through which the at least one electrode tab is drawn out and one or more second sealing portions through which the at least one electrode tab is not drawn out.

In an embodiment, the insulating portion may cover the first sealing portion and may include a slit through which the at least one electrode tab is drawn out.

In an embodiment, one or more of the second sealing portions may be folded, such that a terminal end of the second sealing portion is provided to be adjacent to the main chamber, and the insulating portion may cover the terminal end of the second sealing portion.

In an embodiment, a sealant may be provided on an outer surface of the at least one electrode tab, the sealant may be interposed between the at least one electrode tab and the sealing portion, and at least a portion of the sealant may include a first sealant region protruding outward from the sealing portion. The at least one electrode tab may be drawn out in parallel with a first direction, which is a direction in which the at least one electrode tab is drawn out from the pouch-type case, and may be drawn outward from a terminal end of the sealing portion by a first length. The insulating portion may cover the first sealant region and may extend outward from the terminal end of the sealing portion by a second length in parallel with the first direction. The first sealant region may be exposed outward from the terminal end of the sealing portion by a third length in parallel with the first direction. The third length may be 5% to 70% of the second length.

In an embodiment, the second length of the insulating portion in parallel with the first direction may be 100% to 250% of the third length.

In an embodiment, the second length may be from 8 mm to 15 mm, and the third length may be from 0.5 mm to 7 mm.

In an embodiment, the insulating portion may have a surface roughness portion on an outer surface thereof.

In an embodiment, the insulating portion may further include a thermally conductive filler.

In an embodiment , A pouch-type secondary battery may comprise an electrode assembly comprising at least one electrode tab; a pouch-type case accommodating the electrode assembly and including a sealing portion sealed around a periphery of the electrode assembly, the electrode tab extending from the electrode assembly and being drawn out of the pouch-type case through the sealing portion; an insulating portion covering at least a portion of the sealing portion, and covering at least a terminal end of the sealing portion adjacent to the electrode tab, the insulating portion extends along the electrode tab and is disposed to insulate the electrode tab from the sealing portion.

According to an embodiment of the present disclosure, a pouch-type secondary battery with improved safety and productivity may be provided.

Further, according to an embodiment of the present disclosure, the pouch-type secondary battery exhibiting high process efficiency while exhibiting improved safety may be provided by forming an insulating portion in the pouch-type secondary battery using a novel method.

### BRIEF DESCRIPTION OF THE DRAWINGS

FIG. 1 is a perspective view of a pouch-type secondary battery according to an embodiment of the present disclosure;
FIG. 2 is an exploded perspective view of FIG. 1;
FIG. 3 is a cross-sectional view of a sheet member according to an embodiment of the present disclosure;
FIG. 4 is a cross-sectional view taken along line A-A of FIG. 1;
FIG. 5 is a diagram illustrating a pouch-type secondary battery according to another embodiment of the present disclosure;
FIG. 6 is a diagram schematically illustrating a pouch-type secondary battery according to still another embodiment of the present disclosure;
FIG. 7 is a diagram schematically illustrating a pouch-type secondary battery according to yet another embodiment of the present disclosure;
FIG. 8 is a diagram illustrating a pouch-type secondary battery according to a further embodiment of the present disclosure;
FIG. 9 is a view of the pouch-type secondary battery of FIG. 8, as seen in a direction toward an electrode tab;
FIG. 10 is a diagram illustrating a pouch-type secondary battery according to still a further embodiment of the present disclosure;
FIG. 11 is a diagram illustrating a pouch-type secondary battery according to an additional embodiment of the present disclosure;
FIG. 12 is a diagram illustrating a pouch-type secondary battery according to a further additional embodiment of the present disclosure;
FIG. 13 illustrates various configurations of a pouch-type secondary battery according to still a further additional embodiment of the present disclosure; and
FIG. 14 is a diagram illustrating an insulating portion according to a different embodiment of the present disclosure.

### DETAILED DESCRIPTION

Hereinafter, specific descriptions in accordance with the present disclosure are provided (with reference to the accompanying drawings). It is noted, however, that the descriptions are merely illustrative and the present disclosure is not limited to specific embodiments described in this specification.

In the present disclosure, expressions such as "having," "may have," "comprising," or "may comprise" indicate the presence of a corresponding feature (e.g., a numerical value, function, operation, or a component such as a part) and do not preclude the presence of additional features.

Unless otherwise specified, for any property mentioned in the present disclosure that is affected by measurement temperature, the property is measured at room temperature and at atmospheric pressure.

As used herein, the term "room temperature" refers to the natural, unheated, and uncooled temperature, for example, any temperature in the range of 10 °C to 30 °C, such as about 15 °C or higher, about 18 °C or higher, about 20 °C or higher, about 23 °C or higher, about 27 °C or lower, or 25 °C. Unless otherwise specified, the unit of temperature is degrees Celsius (°C).

Unless otherwise specified, for any property mentioned in the present disclosure that is affected by measurement pressure, the property is measured at atmospheric pressure. As used herein, the term "atmospheric pressure" refers to a natural pressure without being pressurized or depressurized, typically in the range of about 700 mmHg to about 800 mmHg.

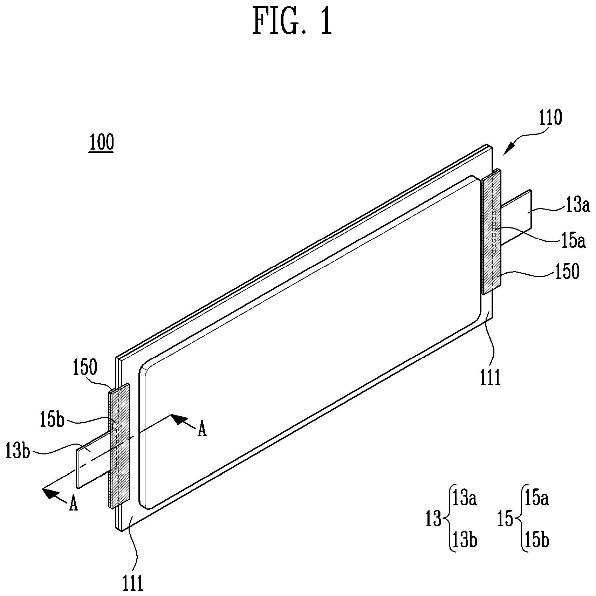

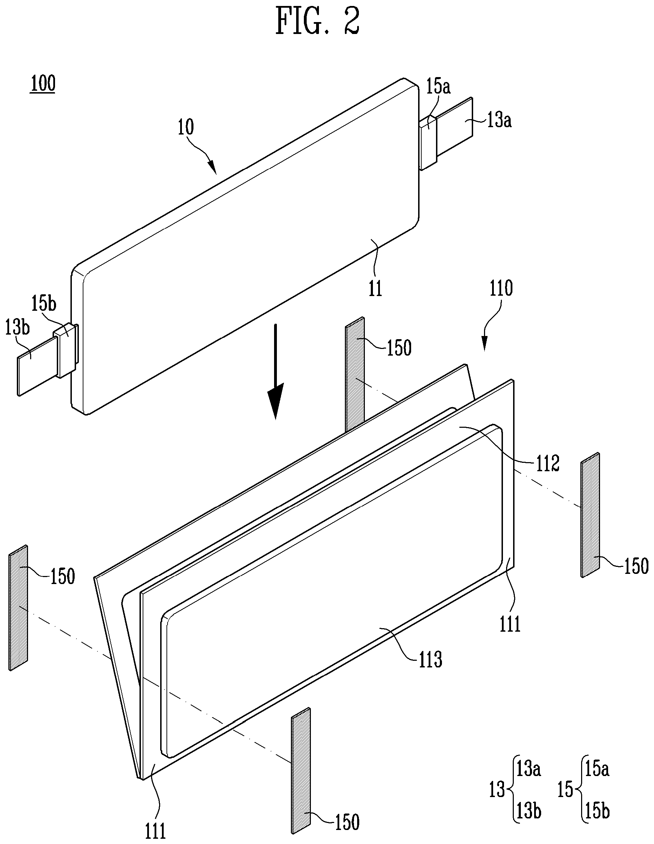

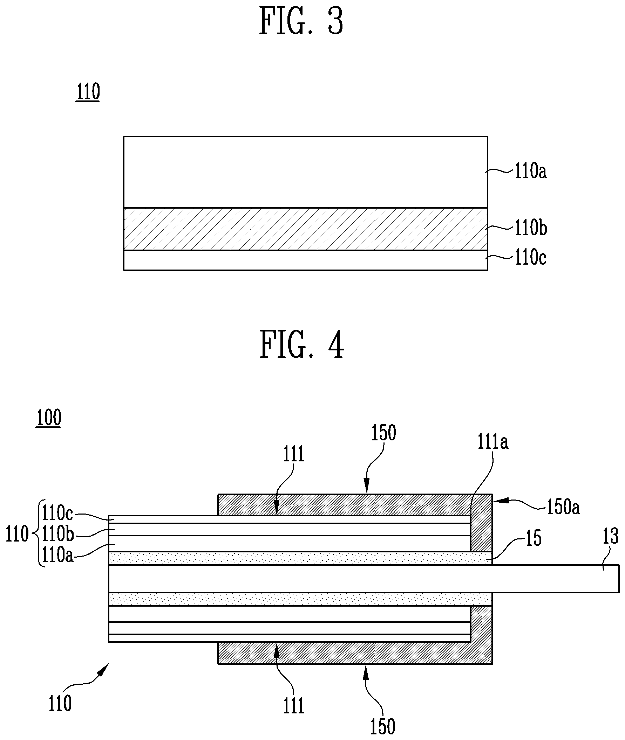

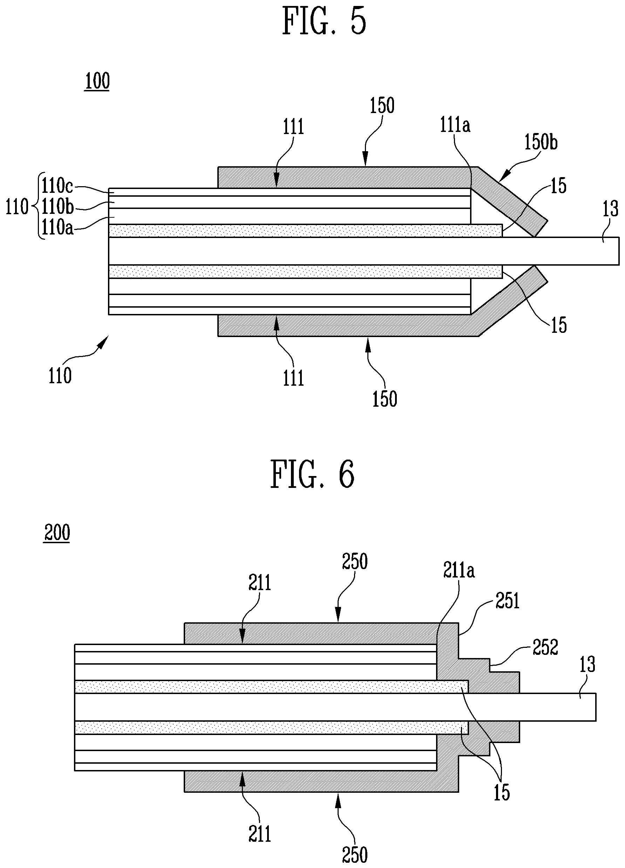

FIG. 1 is a perspective view of a pouch-type secondary battery according to an embodiment of the present disclosure. FIG. 2 is an exploded perspective view of FIG. 1. FIG. 3 is a cross-sectional view of a sheet member according to an embodiment of the present disclosure. FIG. 4 is a cross-sectional view taken along line A-A of FIG. 1. FIG. 5 is a diagram illustrating a pouch-type secondary battery according to another embodiment of the present disclosure.

Referring to FIGS. 1 to 4, a pouch-type secondary battery 100 according to an embodiment of the present disclosure may include an electrode assembly 10 including one or more electrode tabs 13; a pouch-type case 110 accommodating the electrode assembly 10 such that the electrode tabs 13 are drawn out to the outside through sealing portions 111 and 112; and an insulating portion 150 covering at least a portion of the sealing portions 111 and 112. The pouch-type case 110 may be formed of a sheet member in which a plurality of layers are laminated, the sealing portions 111 and 112 may be formed by sealing at least a portion of the sheet member, and the insulating portion 150 may cover at least a portion of the sealing portions 111 and 112 and may be disposed in a position corresponding to at least a portion of the electrode tab 13.

Typically, in a pouch-type secondary battery, electrode tabs are provided to be drawn out to the outside of a pouch case; however, a short circuit may occur between the electrode tabs and a metal layer exposed at a cross-section of the pouch case, or corrosion may occur due to an electrolyte solution. In particular, a pouch-type secondary battery in which corrosion has progressed at the electrode tab side may cause safety issues, such as leading to fire of the secondary battery as an internal electrolyte solution leaks. Furthermore, on a shear surface of the pouch case, a plurality of cutting processes are performed, making it difficult to prevent or mitigate exposure of the metal layer inside the pouch case.

In contrast, the pouch-type secondary battery according to an embodiment of the present disclosure may effectively prevent or mitigate a short circuit between a metal layer exposed at a cross-section of the pouch case and the electrode tabs.

Furthermore, the pouch-type secondary battery according to an embodiment of the present disclosure may easily guide the position of the insulating portion 150 provided on the sealing portions 111 and 112, thereby preventing or mitigating errors in manufacturing process and improving productivity.

Furthermore, the pouch-type secondary battery according to an embodiment of the present disclosure may exhibit high safety while reducing unnecessary costs.

Referring to FIGS. 1 and 2, the pouch-type secondary battery 100 may include the electrode assembly 10, the pouch-type case 110 accommodating the electrode assembly 10, and the insulating portion 150 covering at least a portion of the sealing portions 111 and 112 of the pouch-type case 110.

The electrode assembly 10 may include a positive electrode, a negative electrode, and a separator or solid electrolyte interposed between the positive electrode and the negative electrode. The electrode assembly 10 may be accommodated in a main chamber 113 of the formed pouch-type case 110, and may be accommodated with a liquid electrolyte. For example, when a separator is interposed between the positive electrode and the negative electrode, a liquid electrolyte containing a lithium salt may be accommodated together. Alternatively, when a solid electrolyte is interposed between the positive electrode and the negative electrode, a liquid electrolyte may be omitted.

The electrode tabs may include a positive electrode tab 13a and a negative electrode tab 13b. The positive electrode and the negative electrode may be connected to the positive electrode tab 13a and the negative electrode tab 13b, respectively. The positive electrode tab 13a and the negative electrode tab 13b may include conductive metal, and may be drawn out to the outside of the pouch-type case 110.

In the pouch-type case 110, the electrode assembly 10 may be accommodated in the main chamber 113 formed by forming a sheet, and the sealing portions 111 and 112 may be thermally fused. The positive electrode tab 13a and the negative electrode tab 13b drawn out through the sealing portions 111 and 112 may be connected to a charger/discharger, such that charging and discharging may be performed. The sealing portions 111 and 112 may include a first sealing portion 111 contacting the positive electrode tab 13a and the negative electrode tab 13b, and a second sealing portion 112 connecting the first sealing portions 111 to each other. The second sealing portion 112 might not be provided with the positive electrode tab 13a and the negative electrode tab 13b.

One or more of the positive electrode tab 13a and the negative electrode tab 13b may include a sealant 15. The sealant 15 may include a first sealant 15a and a second sealant 15b provided to the positive electrode tab 13a and the negative electrode tab 13b, respectively. The first sealant 15a and the second sealant 15b may cover at least a portion of the positive electrode tab 13a and the negative electrode tab 13b, respectively, thereby reducing the area where the positive electrode tab 13a and the negative electrode tab 13b directly contact the pouch-type case 110.

Furthermore, the sealant 15 may improve adhesion between an inner layer of the pouch-type case 110, which is formed of a different material from the positive electrode tab 13a and the negative electrode tab 13b, and the positive and negative electrode tabs 13a and 13b, and may prevent or mitigate damage to the pouch-type case 110 caused by the positive and negative electrode tabs 13a and 13b.

The sealant 15 may be formed of a non-conductive material having electrical insulation properties. The sealant 15 may be provided in the form of a film to surround the positive electrode tab 13a and the negative electrode tab 13b. Furthermore, the sealant 15 may be provided in the form of a polymer resin to coat outer surfaces of the positive electrode tab 13a and the negative electrode tab 13b.

The sealant 15 may be one or more selected from the group consisting of polyethylene, polyacetylene, polytetrafluoroethylene (PTFE), nylon, polyimide, polyethylene terephthalate, and polypropylene.

Referring to FIG. 3, the pouch-type case 110 may be provided in the form of a sheet, and the sheet form may be formed by sequentially laminating an inner layer 110a, a metal layer 110b, and an outer layer 110c. The electrode assembly 10 may contact the inner layer 110a, and the outer layer 110c may serve as an outer surface of the pouch-type case 110.

In the pouch-type case 110, the inner layer 110a may directly contact the electrode assembly 10 or electrolyte. Further, the inner layer 110a may be subjected to electrochemical reactions due to the electrode assembly 10, electrolyte, or the like. Further, the inner layer 110a may form the sealing portions 111 and 112 by thermal fusion, thereby sealing the pouch-type secondary battery 100. The inner layer 110a may be configured to provide electrical insulation while sealing and preventing or mitigating leakage of an electrolyte solution or the like.

The inner layer 110a may have an average thickness of 30 µm to 180 µm. When the average thickness of the inner layer 110a is less than 30 µm, a short circuit may occur with the positive electrode tab 13a and the negative electrode tab 13b during the process of forming the sealing portions 111 and 112, and when the average thickness of the inner layer 110a exceeds 180 µm, the inner layer 110a may melt during the process of thermal fusion, thereby damaging the exterior of the pouch-type secondary battery 100 and degrading the sealing properties. The inner layer 110a may include one or more of polypropylene (PP) and cast polypropylene (CPP).

The metal layer 110b may provide mechanical strength to the pouch-type case 110 and maintain a shape of the main chamber 113. Further, the metal layer 110b may prevent or mitigate the ingress of moisture, air, and the like, and may protect the interior of the pouch-type secondary battery 100.

The metal layer 110b may have an average thickness of 25 µm to 60 µm. When the average thickness of the metal layer 110b is less than 25 µm, it is difficult to maintain the formed shape of the pouch-type case 110, and when the average thickness of the metal layer 110b exceeds 60 µm, it is difficult to easily mold the shape of the pouch-type case 110, which isundesirable. The metal layer 110b may include a metal material in the form of a sheet.

The outer layer 110c may protect the pouch-type secondary battery 100 from external impact or scratches, and may improve mechanical strength or the like.

The outer layer 110c may have an average thickness of 8 µm to 50 µm. When the average thickness of the outer layer 110c is less than 8 µm, it is difficult to reliably protect the pouch-type secondary battery 100 against an external impact, and when the average thickness of the outer layer 110c exceeds 50 µm, formability of the pouch-type case 110 may be reduced. Specifically, the outer layer 110c may include polyethylene terephthalate (PET).

Alternatively, the pouch-type case 110 may further include an adhesive layer to improve adhesion between the respective layers. Further, the pouch-type case 110 may further include a buffer layer (not shown) interposed between the metal layer 110b and the outer layer 110c. The buffer layer may insulate the metal layer, while preventing or mitigating the ingress of moisture, air, and the like into the pouch-type secondary battery 100. Furthermore, the buffer layer may improve adhesion between the metal layer 110b and the outer layer 110c. The buffer layer may include nylon or the like.

The insulating portion 150 may be provided on at least a portion of the sealing portions 111 and 112 of the pouch-type case 110.

The insulating portion 150 may be formed by spraying, coating, taping, plasma deposition, aluminum anodizing, or the like.

The insulating portion 150 may be one or more selected from the group consisting of a polyester-based resin, a polyolefin-based resin, a polyamide-based resin, and polycarbonate-based resin.

The insulating portion 150 may be provided on the sealing portions 111 and 112 and may be provided at a portion where the electrode tab 13 is drawn out.

Referring to FIGS. 4 and 5, the insulating portion 150 may include one or more of a stepped portion 150a and an inclined portion 150b.

As shown in FIG. 4, when the insulating portion 150 is provided in the form of the stepped portion 150a, the insulating portion 150 may cover one or more surfaces of the sealing portion 111 and may be bent at a terminal end 111a of the sealing portion 111, such that the insulating portion 150 may be seated on the sealant 15 of the electrode tab 13. An exposed end portion of the sealing portion 111 may be a portion where the metal layer 110b forming the pouch-type case 110 is exposed.

Specifically, the insulating portion 150 may be bent along the terminal end 111a of the sealing portion 111 to form the stepped portion 150a, and the stepped portion 150a may cover the exposed end portion of the sealing portion 111. An end portion of the insulating portion 150 may contact the sealant 15 of the electrode tab 13.

Since the insulating portion 150 covers the exposed end portion of the sealing portion 111, the insulating portion 150 may prevent or mitigate contact between the metal layer 110b, which may be exposed at the sealing portion 111, and the electrode tab 13. Furthermore, since the insulating portion 150 and the sealant 15 include similar materials to each other, adhesion between the insulating portion 150 and the sealant 15 may be improved, thereby effectively preventing or mitigating leakage of electrolyte or the like, at a portion where the electrode tab 13 is drawn out.

Referring to FIG. 5, when the insulating portion 150 is provided in the form of the inclined portion, the insulating portion 150 may cover one or more surfaces of the sealing portion 111, may be bent to have an angle at the terminal end 111a of the sealing portion 111 to form the inclined portion 150b, and the inclined portion 150b may cover an exposed end portion of the sealing portion 111. An end portion of the insulating portion 150 may be seated on an outer surface of the electrode tab 13.

Specifically, the insulating portion 150 may be bent to have an angle along the terminal end 111a of the sealing portion 111 to form the inclined portion 150b and to cover the exposed end portion of the sealing portion 111, and the inclined portion 150b may extend in a direction gradually away from the exposed end portion of the sealing portion 111 and may contact the outer surface of the electrode tab 13.

The insulating portion 150 may effectively cover the metal layer 110b provided at the exposed end portion of the sealing portion 111, thereby preventing or mitigating a short circuit or the like between the metal layer and the electrode tab 13 from occurring. Furthermore, since the insulating portion 150 extends to cover the sealant 15, process efficiency of providing the insulating portion 150 may be improved.

Hereinafter, other embodiments of the present disclosure will be described with reference to FIGS. 6 to 13. In the following embodiments, any repetitive detailed description of components already mentioned above with reference to FIGS. 1 to 5 will be omitted.

FIG. 6 is a diagram schematically illustrating a pouch-type secondary battery according to still another embodiment of the present disclosure.

Referring to FIG. 6, in a pouch-type secondary battery 200 according to an embodiment of the present disclosure, an insulating portion 250 may be provided on a sealing portion 211. An electrode assembly including an electrode tab 13 is accommodated in the pouch-type case, and the electrode tab 13 may be drawn out through the sealing portion 211. The electrode tab 13 may be further provided with the sealant 15. The sealant 15 may be interposed between the electrode tab 13 and the sealing portion 211.

The insulating portion 250 may be provided on a terminal end 211a of the sealing portion 211 and may extend from the sealing portion 211 toward the electrode tab 13. In some embodiments, the insulating portion 250 may extend from the terminal end 211a of the sealing portion 211 in one direction toward the electrode tab 13. Alternatively, the insulating portion 250 may be bent at the terminal end 211a of the sealing portion 211 such that a portion of the insulating portion 250 extends toward the electrode tab 13. One end of the insulating portion 250 may therefore be disposed on the sealing portion 211, while another end of the insulating portion 250 may extend toward or contact the electrode tab 13 outside the pouch-type case.

The insulating portion 250 may include stepped portions 251 and 252 having a plurality of steps. The stepped portions 251 and 252 may include a first stepped portion 251 and a second stepped portion 252 provided sequentially at the terminal end 211a of the sealing portion 211.

The insulating portion 250 may be bent to cover one surface of the sealing portion 211 to form the first stepped portion 251. Sequentially, the insulating portion 250 may be bent to cover one surface of the sealant 15 to form the second stepped portion 252, and may cover an outer surface of the electrode tab 13 protruding from the sealant 15.

In the pouch-type secondary battery 200 according to an embodiment of the present disclosure, the insulating portion 250 may include the stepped portions 251 and 252 having the plurality of steps and therefore may cover a metal layer provided at an exposed end portion of the pouch-type case and a terminal end of the sealant 15 and extend to the electrode tab 13, thereby improving the sealing performance of the sealing portion 211.

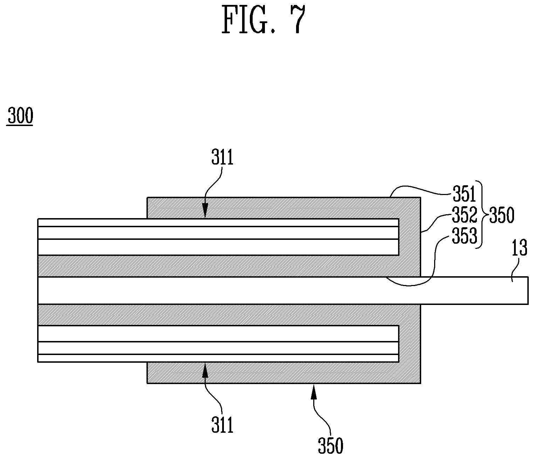

FIG. 7 is a diagram schematically illustrating a pouch-type secondary battery according to yet another embodiment of the present disclosure.

Referring to FIG. 7, in a pouch-type secondary battery 300 according to an embodiment of the present disclosure, an insulating portion 350 may be provided on a sealing portion 311. The insulating portion 350 may be formed by extending one end and the other end thereof, and the other end of the insulating portion 350 may be provided on the electrode tab 13 inside the pouch-type case.

One end of the insulating portion 350 may be provided on an outer surface of the sealing portion 311, and the other end of the insulating portion 350 may be provided inward of the sealing portion 311. The insulating portion 350 may include a first insulating region 351 covering the outer surface of the sealing portion 311, a second insulating region 352 extending from the first insulating region 351 and covering an exposed end portion of the sealing portion 311, and a third insulating region 353 extending from the second insulating region 352 and facing the first insulating region 351 with the sealing portion 311 interposed therebetween.

The insulating portion 350 may extend from the sealing portion 311 and may be bent at a terminal end of the sealing portion 311 to form the first insulating region 351, cover the exposed end portion of the sealing portion 311 to form the second insulating region 352, and the insulating portion 350 may then be bent again to form the third insulating region 353 covering an inner surface of the sealing portion 311.

In an embodiment of the present disclosure, the insulating portion 350 may cover a metal layer provided at the exposed end portion of the sealing portion 311, thereby preventing or mitigating a short circuit between the metal layer and the electrode tab 13. Furthermore, the insulating portion 350 may extend into the sealing portion 311 to cover the exposed end portion of the sealing portion 311, thereby effectively preventing or mitigating a short circuit between the electrode tab 13 and the metal layer, and thus the insulating portion 350 may serve as a sealant provided to the electrode tab 13.

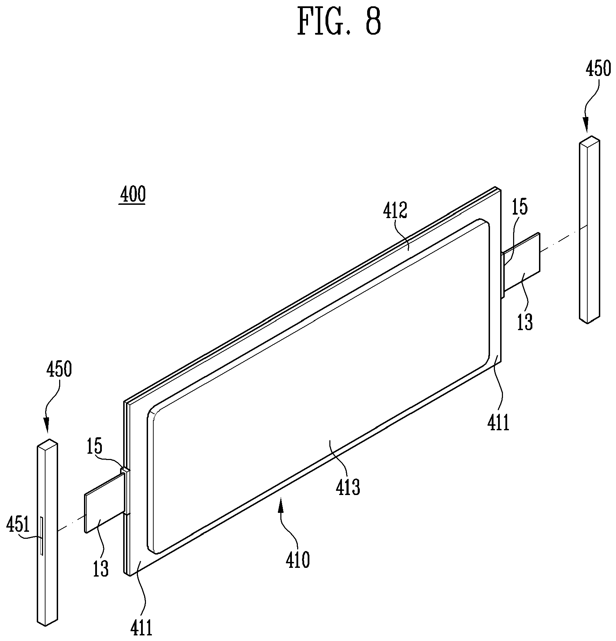

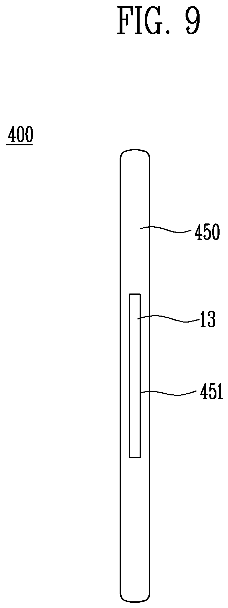

FIG. 8 is a diagram illustrating a pouch-type secondary battery according to a further embodiment of the present disclosure. FIG. 9 is a view of the pouch-type secondary battery of FIG. 8, as seen in a direction toward an electrode tab.

Referring to FIGS. 8 and 9, a pouch-type secondary battery 400 according to an embodiment of the present disclosure may include an electrode assembly including the electrode tab 13, and a pouch-type case accommodating the electrode assembly.

The pouch-type case may include a main chamber 413 recessed inward to accommodate the electrode assembly, and sealing portions 411 and 412 sealing an outer surface of the main chamber 413, and the electrode tab 13 may be drawn out through the sealing portions 411 and 412. The sealing portions 411 and 412 may include one or more first sealing portions 411 through which the electrode tab 13 is drawn out and one or more second sealing portions 412 through which the electrode tab 13 is not drawn out. An insulating portion 450 may be provided on one or more of the first sealing portions 411.

The insulating portion 450 may cover the first sealing portion 411, and may include a slit 451 through which the electrode tab 13 is drawn out. The insulating portion 450 may be provided in the form of an integral cover having the slit 451.

In the pouch-type secondary battery 400, the electrode tab 13 may be exposed through the insulating portion 450 in the cover form, and the insulating portion 450 may cover the first sealing portion 411 entirely, thereby preventing or mitigating contact between the electrode tab 13 and a metal layer provided at an exposed end portion of the first sealing portion 411. Furthermore, the insulating portion 450 may more firmly fix the first sealing portion 411.

Furthermore, by preventing or mitigating electrical conduction between the electrode tab 13 and the metal layer, the insulating portion 450 may effectively prevent or mitigate corrosion occurring in the pouch-type secondary battery 400.

In an embodiment, the pouch-type secondary battery 400 may lower a standard of insulation resistance and improve production yield.

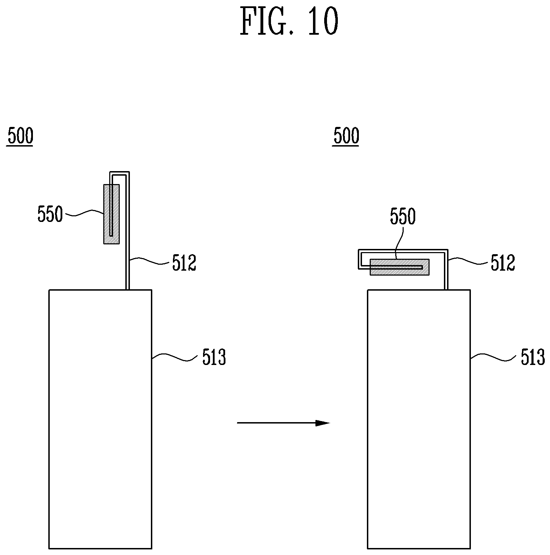

FIG. 10 is a diagram illustrating a pouch-type secondary battery according to still a further embodiment of the present disclosure.

Referring to FIG. 10, a pouch-type secondary battery 500 according to an embodiment of the present disclosure may include a sealing portion sealed along an outer side of a pouch-type case.

FIG. 10 is a schematic view of a portion where an electrode tab is drawn out in the pouch-type secondary battery 500, viewed from the front.

The sealing portion may include a first sealing portion through which the electrode tab 13 is drawn out, and a second sealing portion 512 through which the electrode tab is not drawn out. In the first sealing portion, the electrode tab may be interposed between portions of the pouch-type case, and the second sealing portion 512 may be formed by contacting and fusing inner layers of the pouch-type case to each other.

The pouch-type case may accommodate an electrode assembly in a main chamber 513 and may be sealed by the first sealing portion and the second sealing portion 512 formed along a periphery of the main chamber 513. An insulating portion 550 may cover a terminal end of the second sealing portion 512.

For example, in the pouch-type secondary battery 500, the main chamber 513 may be sequentially sealed by the first sealing portion (not shown), the second sealing portion 512, and the first sealing portion. The first sealing portion may be a portion through which the electrode tab provided at each of one end and the other end of the electrode assembly is drawn out, and may be provided in a pair to face each other. FIG. 10 schematically illustrates a state in which the second sealing portion 512 is bent to be adjacent to the main chamber 513, viewed from the front of a portion where the first sealing portion is provided.

One or more of the second sealing portions 512 may be folded. A terminal end of the folded second sealing portion 512 may be provided to be adjacent to the main chamber 513. Specifically, the insulating portion 550 may be provided to face the main chamber 513.

The second sealing portion 512 may be folded to one side. The second sealing portion may be folded to reduce the volume of the pouch-type secondary battery 500 and may improve insulating properties thereof.

The insulating portion 550 may be provided prior to folding the second sealing portion 512. The insulating portion 550 may cover a metal layer provided on an exposed end portion of the second sealing portion 512, thereby preventing or mitigating electrical conduction by the metal layer, and improving the sealing performance of the second sealing portion 512.

Furthermore, in the process of folding the second sealing portion 512, cracks may occur in an outer layer or the like of the pouch-type case and leakage of electrolyte solution or the like may occur, and in an embodiment of the present disclosure, by providing the insulating portion 550 on the second sealing portion 512, the sealing performance and mechanical strength of the second sealing portion 512 may be improved, thereby preventing or mitigating cracks, leakage, and similar issues.

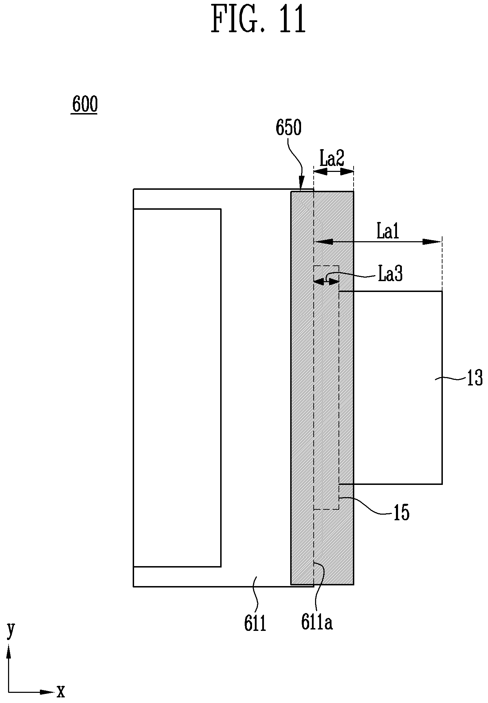

FIG. 11 is a diagram illustrating a pouch-type secondary battery according to an additional embodiment of the present disclosure.

Referring to FIG. 11, in a pouch-type secondary battery 600 according to an embodiment of the present disclosure, an electrode assembly including the electrode tab 13 may be accommodated in a pouch-type case, and the electrode tab 13 is drawn out through a sealing portion 611 of the pouch-type case. The pouch-type secondary battery 600 may include an insulating portion 650 covering at least a portion of the sealing portion 611.

The sealant 15 may be provided on an outer surface of the electrode tab 13 and may be interposed between the electrode tab 13 and the sealing portion 611. At least a portion of the sealant 15 may include a first sealant region (a region corresponding to La3 in FIG. 11) protruding outward from the sealing portion 611.

The sealant 15 may be provided on the electrode tab 13 and may include one or more of a region overlapping the sealing portion 611 and a region provided inward of the sealing portion 611, and may further include the first sealant region protruding outward from the sealing portion 611. The first sealant region may extend from a terminal end 611a of the sealing portion 611 to a point where the sealant 15 terminates. The first sealant region may be covered by the insulating portion 650.

The electrode tab 13 may be drawn out in parallel with a first direction (x-direction), which is a direction in which the electrode tab 13 is drawn out from the pouch-type case, and may be drawn outward from the terminal end 611a of the sealing portion 611 by a first length La1. The insulating portion 650 may cover the first sealant region and extend outward from the terminal end 611a of the sealing portion 611 by a second length La2 in parallel with the first direction (x-direction). The first sealant region may be exposed outward from the terminal end 611a of the sealing portion 611 by a third length La3 in parallel with the first direction (x-direction). The third length La3 may be 5% to 70% of the second length La2.

When the third length La3 is less than 5% of the second length La2, it is difficult for the insulating portion 650 to cover the sealant 15, and when it exceeds 70%, the area of an electrically conductive portion in the electrode tab 13 is reduced, which may act as a resistance during charging and discharging of the pouch-type secondary battery 600.

Specifically, the second length La2 may be from 8 mm to 15 mm, and the third length La3 may be from 0.5 mm to 7 mm.

When the second length La2 is less than 8 mm, an exposed portion of the electrode tab 13 may be too small, which may cause defects or the like during an assembly process, and when the second length La2 exceeds 15 mm, the volume of the pouch-type secondary battery 600 may be unnecessarily increased. Furthermore, since the third length La3 is provided within the aforementioned range, defects in the assembly of the pouch-type secondary battery 600 may be reduced and process efficiency may be improved.

Furthermore, the third length La3 may be 0.5% to 15% of the first length La1.

In an embodiment of the present disclosure, since the first to third lengths La1, La2, and La3 are provided within the aforementioned ranges, the sealing performance of the pouch-type secondary battery 600 may be improved, while effectively preventing or mitigating corrosion or the like of the electrode tab 13 caused by leakage of an electrolyte solution in the sealing portion 611.

In the pouch-type secondary battery 600 according to an embodiment of the present disclosure, the insulating portion 650 may cover the sealant 15. The insulating portion 650 may include a hot-melt film, a tape, or the like, and since the insulating portion 650 has a larger area than the sealant 15, defects such as lifting of the hot-melt film or tape may be prevented or mitigated.

Furthermore, in the pouch-type secondary battery 600, since the insulating portion 650 covers the sealant 15, the sealing force of the sealing portion 611 may be further improved.

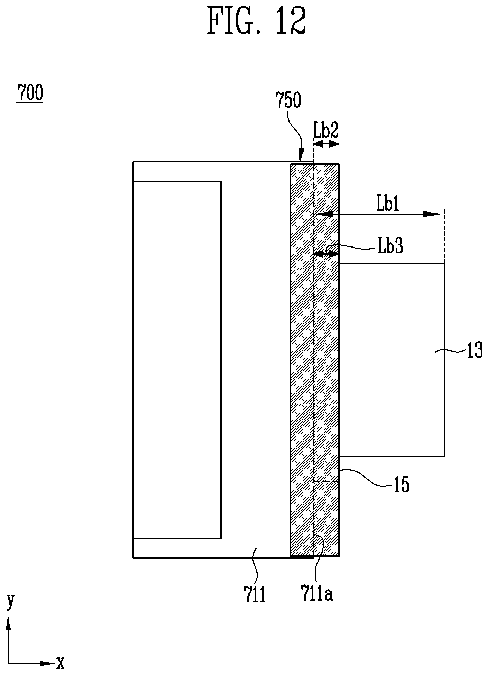

FIG. 12 is a diagram illustrating a pouch-type secondary battery according to a further additional embodiment of the present disclosure.

Referring to FIG. 12, a pouch-type secondary battery 700 according to an embodiment of the present disclosure may include an electrode assembly including the electrode tab 13, and a pouch-type case accommodating the electrode assembly. The electrode assembly may be provided inside the pouch-type case, and a periphery of the pouch-type case may be thermally fused to form a sealing portion 711. The electrode tab 13 may be drawn out to the outside through at least a portion of the sealing portion 711. The pouch-type secondary battery 700 may include an insulating portion 750 covering at least a portion of the sealing portion 711.

The sealant 15 may be provided on at least a portion of the electrode tab 13, and the sealant 15 may be interposed between the electrode tab 13 and the sealing portion 711. At least a portion of the sealant may include a first sealant region (a region corresponding to Lb3 in FIG. 12) exposed outward from the sealing portion 711. The first sealant region may be covered by the insulating portion 750.

The electrode tab 13 may be drawn out from a terminal end 711a of the sealing portion 711 in parallel with the first direction (x-direction) and may be drawn out to the outside by a first length Lb1. The insulating portion 750 may extend from the terminal end 711a of the sealing portion 711 by a second length Lb2 in parallel with the first direction (x-direction). The first sealant region may be exposed outward from the terminal end 711a of the sealing portion 711 by a third length Lb3 in parallel with the first direction (x-direction).

The second length Lb2 of the insulating portion 750 in parallel with the first direction (x-direction) may be 100% to 250% of the third length Lb3. Since the second length Lb2 is provided within the aforementioned range with respect to the third length Lb3, the sealing performance of the sealing portion 711 in the pouch-type secondary battery 700 may be improved, and process defects caused by foreign substances generated during welding between a busbar and the electrode tab 13 may be reduced. More specifically, the second length Lb2 may be 100% of the third length Lb3.

The first length Lb1 of the electrode tab 13 in parallel with the first direction (x-direction) may be 5% to 200% greater than the second length Lb2. Since the first and second lengths Lb1 and Lb2 are provided within the aforementioned range, connection of the electrode tab 13 with an external terminal may be facilitated, while preventing or mitigating an unnecessary increase in volume of the pouch-type secondary battery 700.

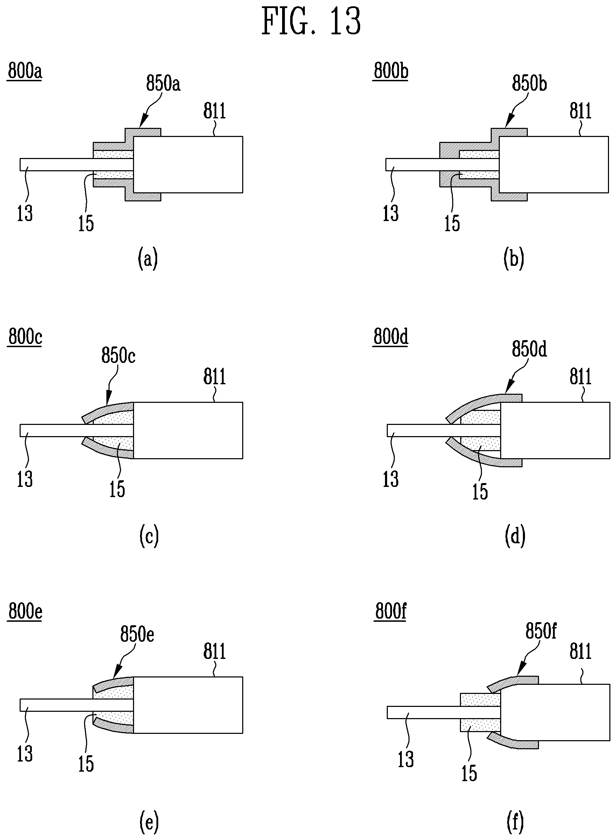

FIG. 13 illustrates various configurations of a pouch-type secondary battery 800a, 800b, 800c, 800d, 800e, or 800f according to still a further additional embodiment of the present disclosure.

Referring to FIG. 13, the pouch-type secondary battery 800a, 800b, 800c, 800d, 800e, or 800f according to an embodiment of the present disclosure may include an electrode assembly including the electrode tab 13, and a pouch-type case covering the electrode assembly. The electrode tab 13 may be drawn out to the outside through a sealing portion 811 of the pouch-type case.

The sealant 15 may be provided on an outer surface of the electrode tab 13, and the sealant 15 may be interposed between the electrode tab 13 and the sealing portion 811. At least a portion of the sealant 15 may include a first sealant region protruding outward from the sealing portion 811, and at least a portion of the first sealant region may be covered by an insulating portion 850a, 850b, 850c, 850d, 850e, or 850f.

Referring to (a) and (b) of FIG. 13, the insulating portion 850a or 850b may continuously cover the sealing portion 811 and the sealant 15, and may be stepped in a direction from the sealing portion 811 toward the sealant 15.

The insulating portion 850a may include a stepped portion formed by being bent in a direction from a terminal end of the sealing portion 811 toward the electrode tab 13, and may continuously cover the sealant 15. The insulating portion 850a may cover the sealant 15 up to a terminal end of the sealant 15 (see (a) of FIG. 13).

Further, the insulating portion 850b may cover an end portion at the terminal end of the sealant 15 and may then extend further onto the electrode tab 13 (see (b) of FIG. 13).

Referring to (c) and (d) of FIG. 13, the insulating portion 850c, 850d, 850e, or 850f may continuously cover the sealing portion 811 and the sealant 15, and may be inclined in a direction from the sealing portion 811 toward the sealant 15.

The insulating portion 850c may be provided to correspond to an exposed end portion of the sealing portion 811, and may extend to the electrode tab 13 while being inclined to cover the sealant 15 (see (c) of FIG. 13) In addition, the insulating portion 850d may extend in an inclined manner from one surface of the sealing portion 811 to cover the sealant 15, and may reach the electrode tab 13 (see (d) of FIG. 13).

The insulating portion 850e or 850f may cover the terminal end of the sealant 15.

The insulating portion 850e or 850f may extend in an inclined manner from the exposed end portion of the sealing portion 811 or from one surface of the sealing portion 811 to cover the sealant 15. The insulating portion 850e or 850f may be provided to correspond to the terminal end of the sealant 15 (see (e) of FIG. 13), or may expose at least a portion of the sealant 15 to the outside (see (f) of FIG. 13).

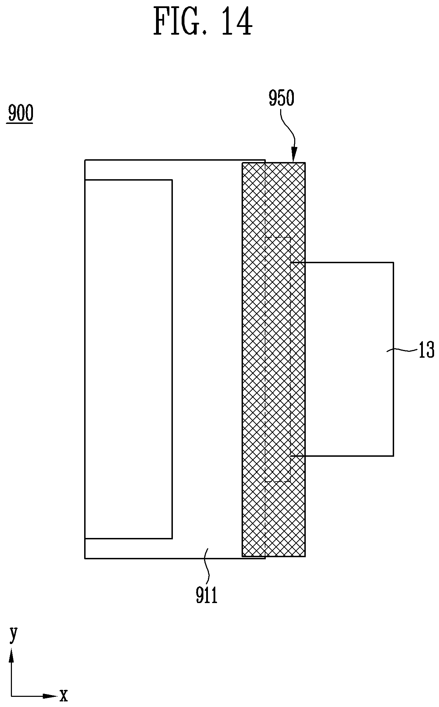

FIG. 14 is a diagram illustrating an insulating portion according to a different embodiment of the present disclosure.

In a pouch-type secondary battery 900 according to an embodiment of the present disclosure, an insulating portion 950 may be provided on a sealing portion 911 through which the electrode tab 13 is drawn out. The insulating portion 950 may cover at least a portion of the electrode tab 13 drawn out from a pouch-type case.

The insulating portion 950 may have a surface roughness portion on an outer surface thereof. The outer surface of the insulating portion 950 is provided with a surface roughness portion to provide frictional force, thereby improving process efficiency of the pouch-type secondary battery 900.

In addition, the insulating portion 950 may further include a thermally conductive filler. The thermally conductive filler may be mixed and provided within the insulating portion 950, or may be provided in the form of a functional layer on a surface of the insulating portion.

The thermally conductive filler may include one or more of aerogel, mica, glass fiber, and fiber reinforced plastic (FRP).

In an embodiment of the present disclosure, the insulating portion 950 may further include the thermally conductive filler, thereby preventing or mitigating accumulation of heat generated from the electrode tab 13 during charging and discharging processes and improving electrochemical characteristics and cycling characteristics of the pouch-type secondary battery 900.

The pouch-type secondary battery according to an embodiment of the present disclosure employs a novel structure to effectively cover a metal layer provided on an exposed end portion of a pouch-type case, thereby preventing or mitigating a short circuit with an electrode tab, specifically a negative electrode tab, corrosion caused by an electrolyte solution, and the like.

The pouch-type secondary battery according to an embodiment of the present disclosure may omit an insulation film, which may be provided on an electrode tab, for example, one or more of a negative electrode tab and a positive electrode tab, and is configured to insulate a battery module including the pouch-type secondary battery, thereby simplifying a structure of the battery module.

It is understood by those skilled in the art that the plurality of exemplary embodiments described above are specific examples of the following aspects.

Aspect 1. A pouch-type secondary battery comprising: an electrode assembly comprising at least one electrode tab; a pouch-type case accommodating the electrode assembly such that the at least one electrode tab is drawn out to the outside through a sealing portion; and an insulating portion covering at least a portion of the sealing portion, wherein the pouch-type case is formed of a sheet member in which a plurality of layers is laminated, and the sealing portion is formed by sealing at least a portion of the sheet member, and wherein the insulating portion covers the at least a portion of the sealing portion and is disposed in a position corresponding to at least a portion of the at least one electrode tab.

Aspect 2. The pouch-type secondary battery of aspect 1, wherein the insulating portion comprises one or more of a stepped portion and an inclined portion.

Aspect 3. The pouch-type secondary battery of aspect 1 or 2, wherein a sealant is provided on an outer surface of the at least one electrode tab, wherein the sealant is interposed between the at least one electrode tab and the sealing portion, wherein at least a portion of the sealant comprises a first sealant region protruding outward from the sealing portion, and wherein at least a portion of the first sealant region is covered by the insulating portion.

Aspect 4. The pouch-type secondary battery of aspect 3, wherein the insulating portion continuously covers the sealing portion and the sealant, and is stepped in a direction from the sealing portion toward the sealant.

Aspect 5. The pouch-type secondary battery of aspect 3, wherein the insulating portion continuously covers the sealing portion and the sealant, and is inclined in a direction from the sealing portion toward the sealant.

Aspect 6. The pouch-type secondary battery of aspect 3, wherein the insulating portion covers a terminal end of the sealant.

Aspect 7. The pouch-type secondary battery of aspect 1 or 2, wherein the insulating portion covers a terminal end of the sealing portion, and extends continuously in one direction from the terminal end of the sealing portion, or is bent at the terminal end of the sealing portion and extends in the other direction.

Aspect 8. The pouch-type secondary battery of aspect 1, wherein the insulating portion includes a first end and a second end extending over the terminal end of the sealing portion, and the second end of the insulating portion is provided on the at least one electrode tab outside the pouch-type case.

Aspect 9. The pouch-type secondary battery of aspect 7, wherein the insulating portion is formed by extending one end and the other end thereof, and wherein the other end of the insulating portion is provided on the at least one electrode tab inside the pouch-type case.

Aspect 10. The pouch-type secondary battery according to any one of the previous aspects, wherein the pouch-type case comprises: a main chamber recessed inward to accommodate the electrode assembly; and the sealing portion sealing an outer surface of the main chamber, and wherein the sealing portion comprises one or more first sealing portions through which the at least one electrode tab is drawn out and one or more second sealing portions through which the at least one electrode tab is not drawn out.

Aspect 11. The pouch-type secondary battery of aspect 10, wherein the insulating portion covers the first sealing portion and comprises a slit through which the at least one electrode tab is drawn out.

Aspect 12. The pouch-type secondary battery of aspect 11, wherein one or more of the second sealing portions are folded, such that a terminal end of the second sealing portion is provided to be adjacent to the main chamber, and wherein the insulating portion covers the terminal end of the second sealing portion.

Aspect 13. The pouch-type secondary battery of aspect 1 or 2, wherein a sealant is provided on an outer surface of the at least one electrode tab, wherein the sealant is interposed between the at least one electrode tab and the sealing portion, wherein at least a portion of the sealant comprises a first sealant region protruding outward from the sealing portion, wherein the at least one electrode tab is drawn out in parallel with a first direction, which is a direction in which the at least one electrode tab is drawn out from the pouch-type case, and is drawn outward from a terminal end of the sealing portion by a first length, wherein the insulating portion covers the first sealant region and extends outward from the terminal end of the sealing portion by a second length in parallel with the first direction, wherein the first sealant region is exposed outward from the terminal end of the sealing portion by a third length in parallel with the first direction, and wherein the third length is 5% to 70% of the second length.

Aspect 14. The pouch-type secondary battery of aspect 13, wherein the second length of the insulating portion in parallel with the first direction is 100% to 250% of the third length, optionally wherein the second length is from 8 mm to 15 mm, and wherein the third length is from 0.5 mm to 7 mm.

Aspect 15. The pouch-type secondary battery according to any one of the previous aspects, wherein the insulating portion has a surface roughness portion on an outer surface thereof, optionally wherein the insulating portion further comprises a thermally conductive filler.

Those skilled in the art to which the present disclosure pertains will understand that the present disclosure may be implemented in other specific forms without departing from its technical spirit or essential features. Therefore, the embodiments described above are to be understood as illustrative and not restrictive in all respects. The scope of the present disclosure is defined by the appended claims rather than the foregoing detailed description, and all changes or modifications derived from the meaning and scope of the claims and their equivalent concepts should be interpreted as being included in the scope of the present disclosure.

## Claims

1. A pouch-type secondary battery comprising:
an electrode assembly comprising at least one electrode tab;
a pouch-type case accommodating the electrode assembly such that the at least one electrode tab is drawn out to the outside through a sealing portion; and
an insulating portion covering at least a portion of the sealing portion,
wherein the pouch-type case is formed of a sheet member in which a plurality of layers is laminated, and the sealing portion is formed by sealing at least a portion of the sheet member, and
wherein the insulating portion covers the at least a portion of the sealing portion and is disposed in a position corresponding to at least a portion of the at least one electrode tab.

2. The pouch-type secondary battery of claim 1, wherein the insulating portion comprises one or more of a stepped portion and an inclined portion.

3. The pouch-type secondary battery of claim 1 or 2, wherein a sealant is provided on an outer surface of the at least one electrode tab,
wherein the sealant is interposed between the at least one electrode tab and the sealing portion,
wherein at least a portion of the sealant comprises a first sealant region protruding outward from the sealing portion, and
wherein at least a portion of the first sealant region is covered by the insulating portion.

4. The pouch-type secondary battery of claim 3, wherein the insulating portion continuously covers the sealing portion and the sealant, and is stepped in a direction from the sealing portion toward the sealant.

5. The pouch-type secondary battery of claim 3, wherein the insulating portion continuously covers the sealing portion and the sealant, and is inclined in a direction from the sealing portion toward the sealant.

6. The pouch-type secondary battery of claim 3, wherein the insulating portion covers a terminal end of the sealant.

7. The pouch-type secondary battery of claim 1 or 2, wherein the insulating portion covers a terminal end of the sealing portion, and extends continuously in one direction from the terminal end of the sealing portion, or is bent at the terminal end of the sealing portion and extends in the other direction.

8. The pouch-type secondary battery of claim 1, wherein the insulating portion includes a first end and a second end extending over the terminal end of the sealing portion, and the second end of the insulating portion is provided on the at least one electrode tab outside the pouch-type case.

9. The pouch-type secondary battery of claim 7, wherein the insulating portion is formed by extending one end and the other end thereof, and
wherein the other end of the insulating portion is provided on the at least one electrode tab inside the pouch-type case.

10. The pouch-type secondary battery according to any one of the previous claims, wherein the pouch-type case comprises:
a main chamber recessed inward to accommodate the electrode assembly; and
the sealing portion sealing an outer surface of the main chamber, and
wherein the sealing portion comprises one or more first sealing portions through which the at least one electrode tab is drawn out and one or more second sealing portions through which the at least one electrode tab is not drawn out.

11. The pouch-type secondary battery of claim 10, wherein the insulating portion covers the first sealing portion and comprises a slit through which the at least one electrode tab is drawn out.

12. The pouch-type secondary battery of claim 11, wherein one or more of the second sealing portions are folded, such that a terminal end of the second sealing portion is provided to be adjacent to the main chamber, and
wherein the insulating portion covers the terminal end of the second sealing portion.

13. The pouch-type secondary battery of claim 1 or 2, wherein a sealant is provided on an outer surface of the at least one electrode tab,
wherein the sealant is interposed between the at least one electrode tab and the sealing portion,
wherein at least a portion of the sealant comprises a first sealant region protruding outward from the sealing portion,
wherein the at least one electrode tab is drawn out in parallel with a first direction, which is a direction in which the at least one electrode tab is drawn out from the pouch-type case, and is drawn outward from a terminal end of the sealing portion by a first length,
wherein the insulating portion covers the first sealant region and extends outward from the terminal end of the sealing portion by a second length in parallel with the first direction,
wherein the first sealant region is exposed outward from the terminal end of the sealing portion by a third length in parallel with the first direction, and
wherein the third length is 5% to 70% of the second length.

14. The pouch-type secondary battery of claim 13, wherein the second length of the insulating portion in parallel with the first direction is 100% to 250% of the third length,
optionally wherein the second length is from 8 mm to 15 mm, and wherein the third length is from 0.5 mm to 7 mm.

15. The pouch-type secondary battery according to any one of the previous claims, wherein the insulating portion has a surface roughness portion on an outer surface thereof,
optionally wherein the insulating portion further comprises a thermally conductive filler.
